# EUROPÄISCHE PATENTSCHRIFT

(11) **EP 3 625 109 B1**
(45) Veröffentlichungstag und Bekanntmachung des Hinweises auf die Patenterteilung: **07.04.2021**
(21) Anmeldenummer: 18725168.1
(22) Anmeldetag: 14.05.2018
(51) Int. Cl.: B62D 1/19

(54) **TELESKOPIERBARE LENKWELLE FÜR EIN KRAFTFAHRZEUG**
TELESCOPABLE STEERING SHAFT FOR A MOTOR VEHICLE
ARBRE DE DIRECTION TÉLESCOPIQUE POUR UN VÉHICULE AUTOMOBILE

(30) Priorität: 18.05.2017 DE 102017208391
(43) Veröffentlichungstag der Anmeldung: 25.03.2020
(73) Patentinhaber: thyssenkrupp Presta AG, 9492 Eschen (LI); thyssenkrupp AG, 45143 Essen (DE)
(72) Erfinder: PÄKEL, Florian, 9493 Mauren (LI); POGGEMANN, Dennis, 6800 Feldkirch (AT); FEHR, Robert, 9492 Eschen (LI)
(74) Vertreter: thyssenkrupp Intellectual Property GmbH
(86) Internationale Anmeldenummer: PCT/EP2018/062340
(87) Internationale Veröffentlichungsnummer: WO 2018/210727

(56) Entgegenhaltungen:
- EP-A1- 0 713 820
- EP-A1- 2 910 451
- GB-A- 2 273 969
- GB-A- 2 312 266
- US-A1- 2007 113 701

## Beschreibung

Die Erfindung betrifft eine teleskopierbare Lenkwelle für ein Kraftfahrzeug, mit einer Innenwelle, die in einer Außenwelle koaxial und in axialer Richtung der Lenkwelle verschiebbar aufgenommen ist, wobei Innenwelle und Außenwelle im Querschnitt korrespondierende Profile zur Übertragung eines Drehmoments aufweisen, wobei zwischen der Innenwelle und der Außenwelle eine Profilhülse angeordnet ist, wobei die Profilhülse an der Außenwelle oder der Innenwelle fixiert ist, und die Profilhülse unter Absorption von Bewegungsenergie deformiert, wenn im Crashfall die Außenwelle über einen axialen Verstellbereich hinaus über die Innenwelle geschoben wird.

Aus der EP 2 910 451 A1 ist eine Lenkwelle mit einer in einer Außenwelle teleskopierbar aufgenommenen Innenwelle bekannt, die einen axialen Verstellbereich und einen daran anschließenden Energieabsorptionsbereich aufweist. Wird die Innenwelle über den axialen Verstellbereich hinaus in der Außenwelle verschoben, so erreicht sie den Energieabsorptionsbereich, der sich dadurch auszeichnet, dass dort sehr viel höhere Kräfte für die Axialverschiebung erforderlich sind. Solche Kräfte treten im Crashfall auf. Im Crashfall wird eine vorbestimmte Kraft, die über das Lenkrad in die Lenkwelle eingetragen wird, überschritten, so dass die Axialverschiebung unter Energieabsorption erfolgt. Ein Teil der Bewegungsenergie wird dann im Energieabsorptionsbereich absorbiert. Nachteil dieser Lösung ist es, dass die Innenwelle und die Außenwelle aufwändig zu fertigen sind und hohe Toleranzanforderungen bestehen, um eine leichtgängige, gleichmäßige Verstellung und eine vordefinierte Crashcharakteristik sicherzustellen.

Eine Lenkwelle der eingangs genannten Art ist aus der US 2007/113701 A1 bekannt. Diese ist aufwendig in der Herstellung und weist eine hohe Toleranzanfälligkeit auf.

Aufgabe der Erfindung ist es, eine verstellbare Lenkwelle mit einem Energieabsorptionsabschnitt bereitzustellen, die einfach und kostengünstig zu fertigen ist und eine geringe Toleranzanfälligkeit aufweist.

Gelöst wird diese Aufgabe durch die Merkmale des Patentanspruchs 1. Vorteilhafte Ausführungsformen sind in den Unteransprüchen beschrieben.

Die erfindungsgemäße Lösung sieht vor, dass die jeweils andere Welle mit mindestens einem in den radialen Bereich der Profilhülse ragenden Vorsprung versehen ist, der die Profilhülse unter Absorption von Bewegungsenergie deformiert.

Im Gegensatz zum genannten Stand der Technik wird die Energie nicht durch Verformung der Außenwelle selbst, sondern durch Deformation der Profilhülse absorbiert. Die Deformation der Profilhülse zur Energieabsorption kann durch eine Umformung und/oder Zerstörung der Profilhülse erfolgen. Für die Fertigung sind nur geringe Änderungen an vorhandenen Fertigungswerkzeugen erforderlich. Außenwelle und Innenwelle müssen nicht mit hoher Genauigkeit zueinander passen, so dass die erfindungsgemäße Lösung nicht anfällig für Fertigungstoleranzen ist. Die Profilhülse die zwischen der Innenwelle und der Außenwelle angeordnet ist, überträgt das in die Lenkwelle eingebrachte Drehmoment zwischen der Innenwelle und der Außenwelle, mit anderen Worten erfolgt der Kraftfluss zwischen der Innenwelle und der Außenwelle durch die Profilhülse.

In einer vorteilhaften Weiterbildung kann die Innenwelle als Vollwelle oder Hohlwelle ausgebildet sein.

In einer vorteilhaften Weiterbildung ist die Profilhülse mit Vorteil auf der Innenwelle fixiert und die Außenwelle weist mindestens einen radial nach innen ragenden Vorsprung für die Verformung der Profilhülse auf. Radial nach innen ragende Vorsprünge sind auf einfache Weise zu fertigen. Deshalb ist die genannte Ausführungsform bezüglich der Fertigungskosten besonders günstig.

Mit Vorteil ist der Vorsprung in das Material der rohrförmigen Außenwelle eingeformt. Der Vorsprung und die Außenwelle sind somit bevorzugt als einstückiges, integrales Bauteil ausgebildet. Durch die Einformung von außen in die Außenwelle formt sich im Inneren der Außenwelle ein Vorsprung heraus, der radial nach Innen hervorsteht. Diese Einformung lässt sich in einfacher und kostengünstiger Art und Weise in die Außenwelle einformen, beispielsweise mittels eines Umformwerkzeugs.

In einer ersten bevorzugten Ausführungsform sind mindestens zwei in Umfangsrichtung der Außenwelle gegenüberliegende Vorsprünge vorgesehen. Diese Anordnung gewährleistet eine symmetrische Kraftverteilung, durch die eine einwandfreie Funktion sichergestellt ist. Eine unsymmetrische Kraftverteilung würde ein Verklemmen der Innenwelle in der Außenwelle begünstigen.

In einer weiteren vorteilhaften Ausgestaltungsform sind vier Vorsprünge vorgesehen, von denen jeweils zwei in Umfangsrichtung der Außenwelle gegenüberliegend angeordnet sind. Wie die vorgenannte ist auch diese Ausführungsform mit Vorteil symmetrisch. Durch die doppelte Anzahl von Vorsprüngen können größere Verformungskräfte bereitgestellt und mehr Energie absorbiert werden als im Falle von zwei Vorsprüngen, sofern das Übermaß bzgl. der Ausführung mit zwei und vier Vorsprüngen identisch ist, d.h. die zwei Vorsprünge im gleichen Maße in den Innenraum der Außenwelle hineinragen wie die vier Vorsprünge. Die Ausführungsform empfiehlt sich daher für solche Fälle, wo es auf eine besonders hohe Energieabsorption ankommt.

In einer vorteilhaften Weiterbildung besteht die Profilhülse aus Kunststoff. Besonders bevorzugt ist die Profilhülse vollständig aus Kunststoff gebildet. Dieses Material erlaubt einerseits ein möglichst reibungsarmes Gleiten der Innenwelle in der Außenwelle in dem für die Gelenkwellenverstellung vorgesehenen Axialbereich. Darüber hinaus haben verschiedene Kunststoffmaterialien unterschiedliche Härten, so dass die bei einer Verschiebung der Innenwelle innerhalb des Energieabsorptionsbereichs absorbierte Energie durch entsprechende Wahl des Kunststoffmaterials an die Erfordernisse leicht angepasst werden kann. In einer weiteren besonders vorteilhaften Weiterbildung ist die Profilhülse aus Polyetheretherketon (PEEK) oder Polyoxymethylen (POM) gebildet.

In einer weiteren Ausbildungsform ist die Profilhülse aus einem faserverstärkten Kunststoff gebildet. Besonders bevorzugt umfasst der faserverstärkte Kunststoff Kohlenstofffasern oder Glasfasern.

In einer alternativen Ausbildungsform ist die Profilhülse aus einem metallischen Werkstoff gebildet. Dafür kann die Profilhülse beispielsweise aus Messing oder Bronze gebildet sein.

In einer besonders bevorzugten Ausführungsform ist vorgesehen, dass die Außenwelle zumindest eine Sicke aufweist, die in eine Längsnut der Innenwelle eingreift, dass ein erster Axialbereich der Sicke als Verstellbereich zur Verstellung der Lenkwelle in axialer Richtung und ein zweiter Axialbereich als Energieabsorptionsbereich ausgebildet ist, in dem die Sicke radial nach innen bzw. nach außen weiter vorsteht als im Verstellbereich und den Vorsprung für die Verformung der Profilhülse bildet.

In der Ausführungsform, bei der die Vorsprünge an der Außenwelle durch Einformungen ausgebildet sind, ist mit Vorteil bei weit verbreiteten Ausführungsformen von Außenwellen anwendbar, welche bevorzugt vier parallel zur Drehachse der Lenkwelle verlaufende Sicken aufweisen, die gleichmäßig über den Umfang verteilt sind und die in korrespondierende vier Längsnuten der Innenwelle eingreifen, wobei die Profilhülse zwischen der Innenwelle und Außenwelle angeordnet ist. Um solche bekannten und weit verbreiteten Bauformen erfindungsgemäße zu verbessern muss lediglich das für die Einformung der Sicken in die Außenwelle vorgesehene Formwerkzeug im geringen Umfang angepasst werden, so dass es den radial nach innen vorstehenden Vorsprung bei der Ausformung der Sicke gleichzeitig mit einformt.

Bevorzugt wird zumindest eine Sicke und ein Einformung zur Bildung des Vorsprungs mittels eines gemeinsamen Formwerkzeuges eingeformt.

In einer vorteilhaften Ausführungsform kann es vorgesehen sein, dass der Vorsprung bzw. die Vorsprünge einen Anstieg in Form einer Rampe aufweisen. Durch diese Maßnahme lässt sich das Absorptionsniveau von Bewegungsenergie erhöhen, desto weiter die Außenwelle über die Innenwelle geschoben ist.

Die Erfindung betrifft auch eine Lenksäule mit einer Stelleinheit und einer Trageeinheit, wobei eine erfindungsgemäße Lenkwelle gemäß der obigen Beschreibung in der Stelleinheit drehbar gelagert ist.

Bevorzugt ist die Stelleinheit gegenüber der Trageinheit manuell oder motorisch verstellbar ist. Es lässt sich die Energieabsorption mittels der erfindungsgemäßen Lenkwelle in einfacher und kostengünstiger Weise bei manuell oder motorisch verstellbaren Lenksäulen einsetzen.

Ausführungsbeispiele der Erfindung werden nachfolgend anhand der Zeichnungen näher erläutert. Die Figuren zeigen im Einzelnen:
Figur 1: eine Lenksäule mit Trageeinheit und Stelleinheit, in der eine erfindungsgemäße Lenkwelle drehbar gelagert ist, in einer perspektivischen Darstellung;
Figur 2: die Lenksäule mit einer erfindungsgemäßen Lenkwelle von Figur 1 im Längsschnitt;
Figur 3: ein vergrößertes Detail aus Figur 2;
Figur 4: Innenwelle, Profilhülse und Außenwelle einer erfindungsgemäßen Lenkwelle in einer perspektivischen auseinandergezogenen Darstellung;
Figur 5: ein vergrößertes Detail der Außenwelle in einer perspektivischen Darstellung;
Figur 6: eine perspektivische Teildarstellung einer aufgeschnittenen Außenwelle;
Figur 7: ein vergrößertes Detail aus Figur 6;
Figur 8: eine geschnittene Teildarstellung einer erfindungsgemäßen Lenkwelle in einer schematischen Darstellung, bei der sich die Innenwelle im axialen Verstellbereich befindet;
Figur 9: eine geschnittene Teildarstellung einer erfindungsgemäßen Lenkwelle in einer schematischen Darstellung aus Figur 8, jedoch mit der Innenwelle im Energieabsorptionsbereich.

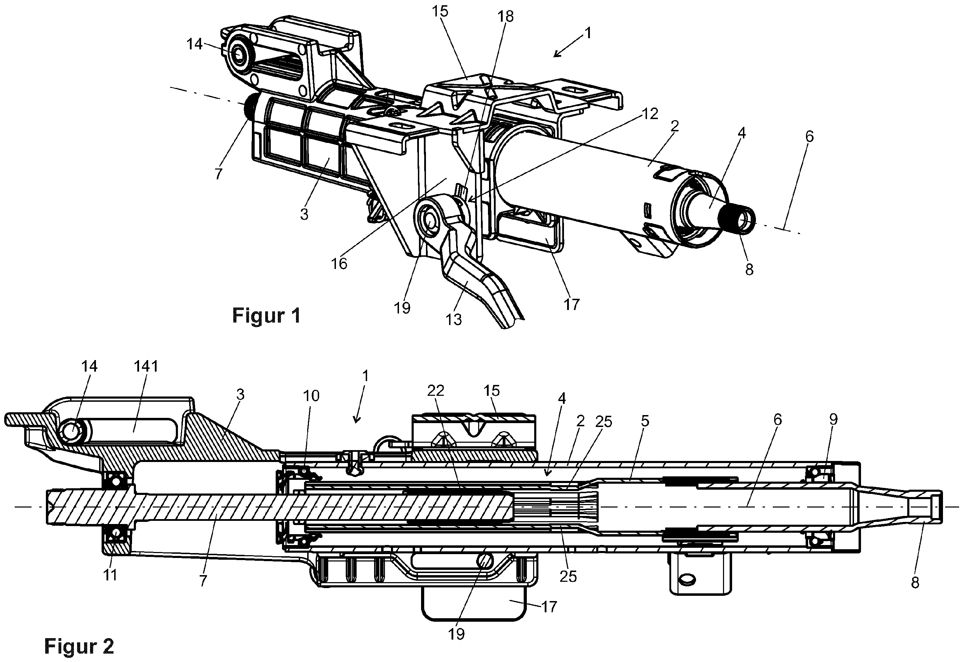

Die Figuren 1 und 2 zeigen eine erfindungsgemäße Lenksäule 1, die eine Stelleinheit 2 und eine Trageeinheit 3 aufweist. In der Stelleinheit 2 ist eine erfindungsgemäßen Lenkwelle 4 angeordnet, die aus einer Außenwelle 5 und einer in der Außenwelle 5 in Richtung einer Drehachse 6 verschiebbar angeordneten Innenwelle 7 besteht. An einem lenkradseitigen Ende 8 der Lenkwelle 4 kann ein nicht gezeigtes Lenkrad angeordnet sein. Durch die Verschiebbarkeit der Außenwelle 5 gegenüber der Innenwelle 7 in axialer Richtung entlang der Drehachse 6 kann das lenkradseitige Ende 8 und damit das nicht gezeigtes Lenkrad in Längsrichtung entsprechend den Vorgaben des Fahrers eingestellt werden.

Die Lenkwelle 4 ist mittels Kugellagern 9, 10 in der Stelleinheit 2 um die Drehachse 6 drehbar gelagert. Des Weiteren ist die Innenwelle 7 mittels eines weiteren Kugellagers 11 an bzw. in der Trageeinheit 3 drehbar gelagert. Die Stelleinheit 2 ist gegenüber der Trageeinheit 3 in Axialrichtung verschiebbar angeordnet, wobei die Stelleinheit 2 in der Trageinheit verschiebbar aufgenommen ist. Die Trageeinheit 3 ist mit einer Klemmvorrichtung 12 ausgestattet, die mittels eines Betätigungshebels 13 zugespannt oder gelöst werden kann. Im gelösten Zustand der Klemmvorrichtung 12 kann die Stelleinheit 2 gegenüber der Trageeinheit 3 in axialer Richtung verschoben und dadurch die Längsverschiebung des lenkradseitigen Endes 8 der Lenkwelle 4 bewirkt werden. Im zugespannten Zustand der Klemmvorrichtung 12 ist die Stelleinheit 2 gegenüber der Trageeinheit 3 fixiert, so dass eine Verschiebung in axialer Richtung nur noch unter Aufbringung sehr hoher Axialkräfte möglich ist, welche im Normalbetrieb des Fahrzeugs nicht auftreten.

Die Trageeinheit 3 ist über ein Schwenklager 14 am nicht gezeigten Fahrzeugchassis angelenkt, so dass die Trageeinheit 3 zusammen mit der Stelleinheit 2 um das Schwenklager 14 schwenkbar ist. Hierdurch wird eine Höhenverstellung des nicht gezeigten Lenkrads ermöglicht, denn beim Verschwenken der Trageeinheit 3 zusammen mit der Stelleinheit 2 bewegt sich das lenkradseitige Ende 8 im Wesentlichen in vertikaler Richtung. Das Schwenklager 14 ist als Hülse ausgebildet, durch die eine nicht gezeigte Schraube hindurchführbar ist zur schwenkbaren Befestigung der Trageinheit eines nicht gezeigten Fahrzeugchassis. Die Trageinheit 3 ist zusammen mit der Stelleinheit 2 gegenüber dem Schwenklager 14 im Crashfall verschiebbar. Das Schwenklager 14 ist in einem Langloch 141 der Trageinheit 3 verschiebbar aufgenommen, so dass sich die Trageinheit 3 beim Überschreiten einer vorbestimmten Kraft, die im Crashfall wirkt, gegenüber dem Schwenklager 14 in Richtung Fahrzeugfront verlagert. Dies erfolgt bevorzugt dann, wenn die Stelleinheit 2 im Crashfall vollständig in die Trageinheit 3 hineinteleskopiert ist.

Zur Fixierung der Trageeinheit 3 in Schwenkrichtung ist ein mit dem nicht gezeigten Fahrzeugchassis fest verbundener Träger 15 vorgesehen, der zwei im Wesentlichen vertikal ausgerichtete Backen 16, 17 aufweist, die die Trageeinheit 3 umgreifenden. Die Backen 16, 17 sind jeweils mit einem im Wesentlichen vertikal angeordneten Schlitz 18 versehen. Durch die beiden Schlitze 18 der Backen 16, 17 ragt ein Klemmbolzen 19 der Klemmvorrichtung 12. Der Klemmbolzen 19 geht auch durch eine nicht gezeigte Öffnung der Trageeinheit 3. Im gelösten Zustand der Klemmvorrichtung 12 kann daher der Klemmbolzen 19 zusammen mit der Trageeinheit 3 im Wesentlichen in vertikaler Richtung durch die Schlitze 18 bewegt werden, so dass die Höhenverstellung des nicht gezeigten Lenkrads erfolgen kann.

Zur Arretierung in der gewünschten vertikalen Position wird der Betätigungshebel 13 betätigt, um die Klemmvorrichtung 12 zuzuspannen. Hierfür verfügt die Klemmvorrichtung 12 über zwei Hubscheiben mit Kulissenbahnen die aufeinander gleiten, so dass der Abstand zwischen dem betätigungshebelseitigen Kopf des Klemmbolzens 19 und dem klemmbolzenseitigen ersten Backen 16 vergrößert, so dass dieser gegen den zweiten Backen 17 gepresst wird. Dadurch wird die Trageeinheit 3 zwischen den beiden Backen 16, 17 festgeklemmt, so dass eine vertikale Verschwenkung der Trageeinheit 3 nicht mehr möglich ist. Gleichzeitig klemmt die Klemmvorrichtung 12 auch die Stelleinheit 2 gegenüber der Trageeinheit 3 fest, so dass eine Verschiebung der Stelleinheit 2 in Richtung der Drehachse 6 im Normalbetrieb des Fahrzeugs unterbleibt.

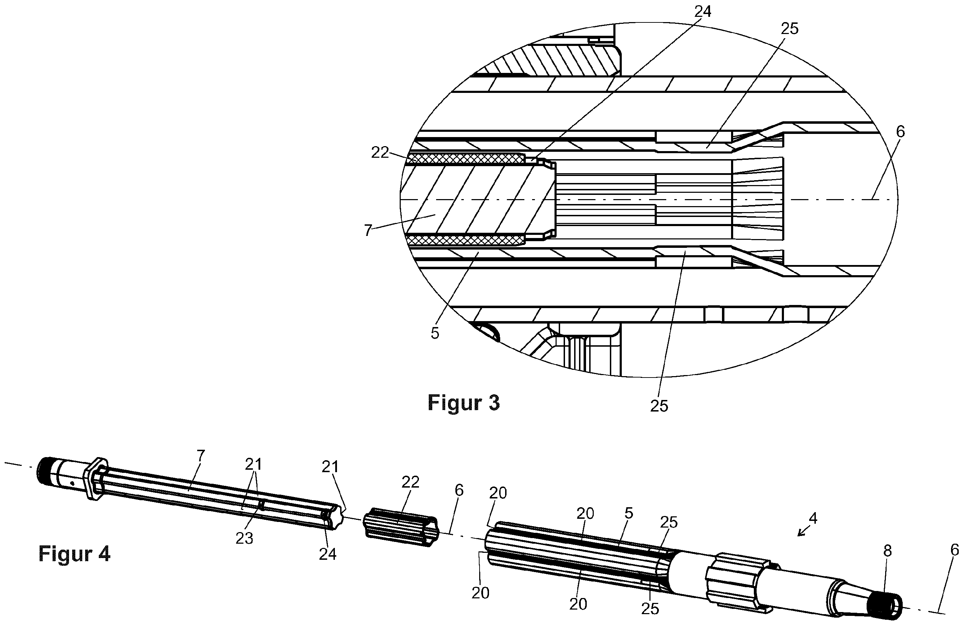

Figur 4 zeigt wie die Außenwelle 5 und die Innenwelle 7 zusammenwirken. Sowohl die Außenwelle 5 als auch die Innenwelle 7 bestehen aus einem im Querschnitt gewellten Rohr. Die Außenwelle 5 weist vier Sicken 20 auf, die parallel zur Drehachse 6 in Längsrichtung verlaufen. Die Sicken 20 ragen gegenüber den anderen Bereichen der Außenwelle 5 radial nach innen. Die Innenwelle 7 umfasst vier parallel zur Drehachse 6 in Längsrichtung verlaufende Längsnuten 21, in welche die Sicken 20 der Außenwelle 5 in radialer Richtung hineinragen. Außenwelle 5 und Innenwelle 7 weisen somit korrespondierende Querschnittsprofile auf. Durch den Formschluss zwischen den Sicken 20 und den Längsnuten 21 in Drehrichtung wird gewährleistet, dass zwischen Außenwelle 5 und Innenwelle 7 Drehmomente übertragen werden können, während die Außenwelle 5 gegenüber der Innenwelle 7 in axialer Richtung entlang der Drehachse 6 teleskopierbar ist, um die Längsverschiebung des Lenkrades zu gewährleisten.

Im radialen Bereich zwischen der Außenwelle 5 und der Innenwelle 7 ist eine Profilhülse 22 angeordnet, deren Profil im Querschnitt an die Innenkontur der Außenwelle 5 und die Außenkontur der Innenwelle 7 angepasst ist. Die Profilhülse 22 ist auf der Innenwelle 7 gegen Verschiebungen in axialer Richtung fixiert. Die Fixierung wird durch zwei von der Außenfläche der Innenwelle 7 radial vorspringende als Nasen 23, 24 ausgebildete Verstemmung gewährleistet. Im Normalbetrieb des Fahrzeugs gleitet die Außenwelle 5 mit ihrer Innenfläche auf der Außenfläche der an der Innenwelle 7 fixierten Profilhülse 22, um eine Längsverstellung des lenkradseitigen Endes 8 der Lenkwelle 4 längs der Drehachse 6 zu gewährleisten.

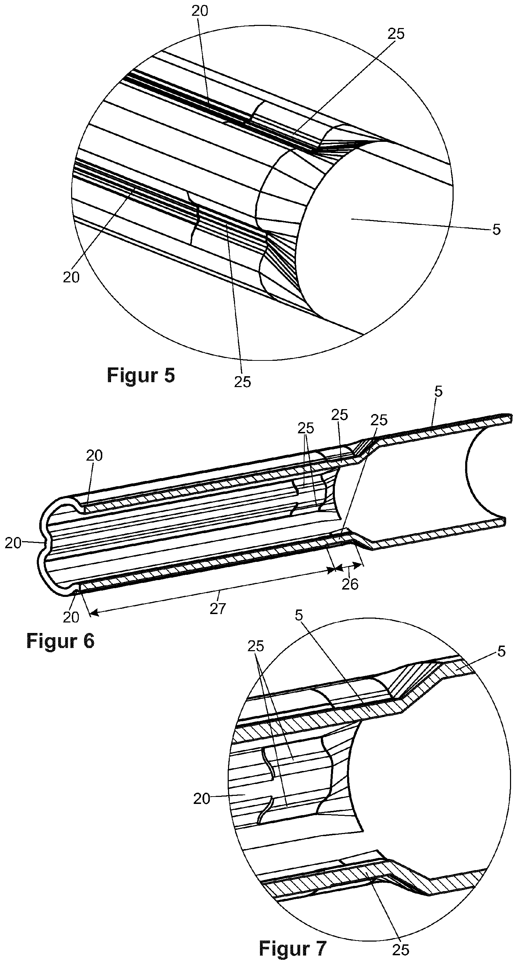

Die Außenwelle 5 ist im Bereich ihrer Sicken 20 jeweils mit einem radial nach innen ragenden Vorsprung 25 versehen, der in den radialen Bereich der Profilhülse 22 ragt. Die vier Vorsprünge 25 grenzen einen Energieabsorptionsbereich 26 von einem Verstellbereich 27 der Außenwelle 5 ab. Siehe hierzu Figuren 6, 8 und 9. Zur Realisierung einer Energieabsorption weist somit die Profilhülse 22 gegenüber den Vorsprüngen 25 ein Übermaß auf.

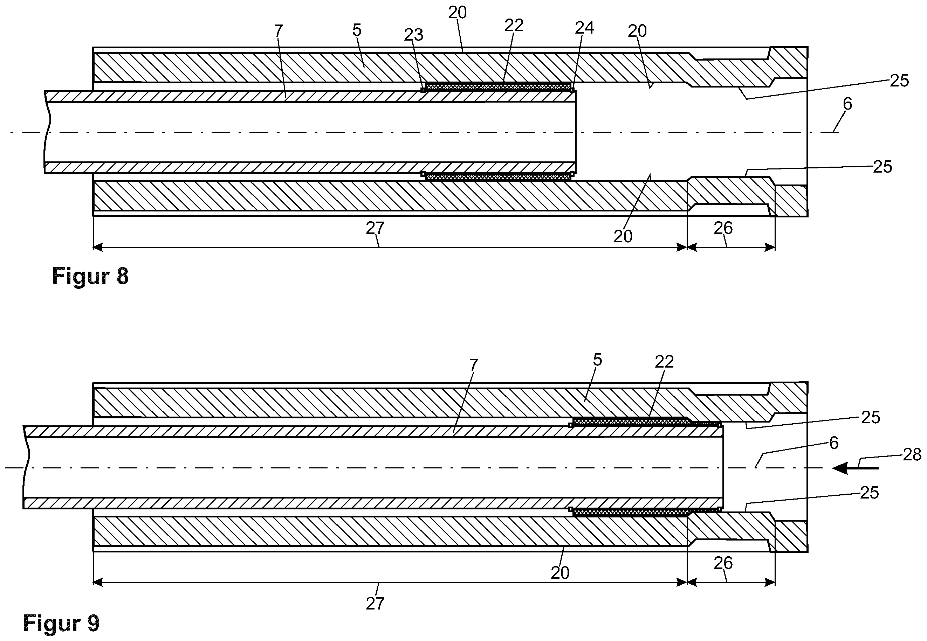

Wird im Crashfall das nicht gezeigte Lenkrad durch starke Axialkräfte in Richtung in der Drehachse 6 verschoben, so verschiebt sich die Außenwelle 5 der Lenkwelle 4 zusammen mit der Stelleinheit 2 unter Überwindung des durch die Klemmvorrichtung 12 erzeugten Klemmenwiderstandes axial entlang der Drehachse 6 in Richtung Fahrzeugfront gemäß dem Pfeil 28 aus Figur 9. Dabei bewegt sich die Profilhülse 22 mit der Innenwelle 7 zunächst innerhalb des Verstellbereichs 27 der Außenwelle 5, wobei die Profilhülse 22 reibungsarm innerhalb der Außenwelle 5 geleitet und keine wesentliche Zusatzkraft entgegen der Bewegung der Außenwelle 5 in Richtung des Pfeiles 28 erzeugt. Diese Situation ist in Figur 8 schematisiert dargestellt.

Figur 9 zeigt in einer schematisierten Darstellung die Situation, wenn die Profilhülse 22 den Energieabsorptionsbereich 26 der Außenwelle 5 erreicht. Jetzt greifen die Vorsprünge 25 der Außenwelle 5 in den Bereich der Profilhülse 22 ein und verformen die Profilhülse 22, die radial nach innen zusammen gedrückt wird. Mit anderen Worten wird die Außenwelle 5 wird im Crashfall über die Innenwelle 7 und der daran fixierten Profilhülse 22 geschoben. Wenn die Profilhülse 22 mit den Vorsprüngen 25 der Außenwelle 5 zusammentrifft, wird die Profilhülse elastisch oder plastisch deformiert. Hierfür muss ein erheblicher Betrag an Verformungsenergie aufgewendet werden, der aus der Bewegungsenergie der Außenwelle 5 und der damit verbundenen in radialer Richtung beweglichen Massen besteht. Die Verschiebung der Profilhülse 22 innerhalb des Energieabsorptionsbereiches 26 erfordert eine sehr viel höhere Kraft als die Verschiebung innerhalb des Verstellbereichs 27. Deshalb tritt im Laufe der axialen Verschiebung der Profilhülse 22 beim Erreichen des Energieabsorptionsbereich 26 eine stark erhöhte Kraft in axialer Richtung auf, die der in Richtung des Pfeils 28 wirkenden axialen Verschiebungskraft entgegen gerichtet ist und damit die im Crashfall auftretende axiale Verschiebung des Lenkrades zur Fahrzeugfront hin bremst.

Die Stärke der Bremskraft kann an die Erfordernisse angepasst werden, indem die Zahl der Vorsprünge 25 der Außenwelle 5 verändert wird oder das vorhandene Übermaß zwischen den Vorsprüngen und der Profilhülse vergrößert wird. Um unsymmetrische Belastungen zu vermeiden wird jedoch empfohlen, dass mindestens zwei Vorsprünge 25 in Umfangsrichtung um 180° zueinander gegenüberliegend angeordnet sind. Im vorliegenden Fall einer Außenwelle 5 mit vier Sicken 20 könnten folglich entweder zwei gegenüberliegende Vorsprünge 25 oder vier über die Umfangsrichtung in gleichmäßigen Abständen von jeweils 90° angeordnete Vorsprünge 25 vorgesehen sein. Bevorzugt ist die Anzahl der Sicken 20 identisch mit der Anzahl der Vorsprünge 25.

Fertigungstechnisch werden die Vorsprünge 25 vorzugsweise durch eine kleine Modifikation des Formwerkzeugs, welches ohnehin für die Einformung der Sicken 20 vorgesehen ist, erzeugt. Dabei entsteht in der jeweiligen Sicke 20 ein geringfügig radial nach innen vorstehender Absatz, der den jeweiligen Vorsprung 25 bildet. Somit ist der Vorsprung 25 bevorzugt durch einen Abschnitt der Sicke 20 gebildet, der weiter nach innen bzw. außen hervorragt als die Sicke 20. Besonders bevorzugt wird die Sicke 20 und der Vorsprung 25 in einem einzigen Fertigungsschritt in die Außenwelle eingeformt.

Mithilfe der Erfindung kann eine Lenkwelle nach einem häufig vorkommenden Baumuster auf einfache und toleranzunanfällige Weise mit einer Energieabsorptionseinrichtung versehen werden.

### BEZUGSZEICHENLISTE

- 1: Lenksäule
- 2: Stelleinheit
- 3: Trageeinheit
- 4: Lenkwelle
- 5: Außenwelle
- 6: Drehachse
- 7: Innenwelle
- 8: lenkradseitiges Ende
- 9: Kugellager
- 10: Kugellager
- 11: Kugellager
- 12: Klemmvorrichtung
- 13: Betätigungshebel
- 14: Schwenklager
- 15: Träger
- 16: Backen
- 17: Backen
- 18: Schlitz
- 19: Klemmbolzen
- 20: Sicken
- 21: Längsnuten
- 22: Profilhülse
- 23: Nase
- 24: Nase
- 25: Vorsprung
- 26: Energieabsorptionsbereich
- 27: Verstellbereich
- 28: Pfeil

## Patentansprüche

1. Teleskopierbare Lenkwelle (4) für ein Kraftfahrzeug, mit einer Innenwelle (7), die in einer Außenwelle (5) koaxial und in axialer Richtung der Lenkwelle (4) verschiebbar aufgenommen ist, wobei Innenwelle (7) und Außenwelle (5) im Querschnitt korrespondierende Profile zur Übertragung eines Drehmoments aufweisen, wobei zwischen der Innenwelle (7) und der Außenwelle (5) eine Profilhülse (22) angeordnet ist, wobei die Profilhülse (22) an der Außenwelle (5) oder der Innenwelle (7) fixiert ist, und die Profilhülse (22) unter Absorption von Bewegungsenergie deformiert, wenn im Crashfall die Außenwelle (5) über einen axialen Verstellbereich (27) hinaus über die Innenwelle (7) geschoben wird, **dadurch gekennzeichnet, dass** die jeweils andere Welle mit mindestens einem in den radialen Bereich der Profilhülse (22) ragenden Vorsprung (25) versehen ist, der die Profilhülse (22) unter Absorption von Bewegungsenergie deformiert.

2. Lenkwelle nach Anspruch 1, **dadurch gekennzeichnet, dass** die Profilhülse (22) auf der Innenwelle (7) fixiert ist und dass die Außenwelle (5) mindestens einen radial nach innen ragenden Vorsprung (25) für die Verformung der Profilhülse (22) aufweist.

3. Lenkwelle nach Anspruch 2, **dadurch gekennzeichnet, dass** der Vorsprung (25) in das Material der rohrförmigen Außenwelle (5) eingeformt ist.

4. Lenkwelle nach Anspruch 2 oder 3, **dadurch gekennzeichnet, dass** mindestens zwei in Umfangsrichtung der Außenwelle (5) gegenüberliegende Vorsprünge (25) vorgesehen sind.

5. Lenkwelle nach einem der Ansprüche 2 bis 4, **dadurch gekennzeichnet, dass** vier Vorsprünge (25) vorgesehen sind, von denen jeweils zwei in Umfangsrichtung der Außenwelle (5) gegenüberliegend angeordnet sind.

6. Lenkwelle nach einem der vorhergehenden Ansprüche, **dadurch gekennzeichnet, dass** die Profilhülse (22) aus Kunststoff besteht.

7. Lenkwelle nach einem der vorhergehenden Ansprüche, **dadurch gekennzeichnet, dass** die Außenwelle (5) zumindest eine Sicke (20) aufweist, die in eine Längsnut (21) der Innenwelle (7) eingreift, dass ein erster Axialbereich der Sicke (20) als Verstellbereich (27) zur Verstellung der Lenkwelle (4) in axialer Richtung und ein zweiter Axialbereich als Energieabsorptionsbereich (26) ausgebildet ist, in dem die Sicke (20) radial nach innen weiter vorsteht als im Verstellbereich (27) und den Vorsprung (25) für die Verformung der Profilhülse (22) bildet.

8. Lenksäule mit einer Stelleinheit (2) und einer Trageeinheit (3), wobei eine Lenkwelle (4) nach einem der vorhergehenden Ansprüche in der Stelleinheit (2) drehbar gelagert ist.

9. Lenksäule nach Anspruch 8, **dadurch gekennzeichnet, dass** die Stelleinheit (2) gegenüber der Trageinheit (3) manuell oder motorisch verstellbar ist.

## Claims

1. Telescopic steering shaft (4) for a motor vehicle, having an inner shaft (7) which is coaxially received in an outer shaft (5) so as to be displaceable in the axial direction of the steering shaft (4), wherein the inner shaft (7) and the outer shaft (5) in the cross section have corresponding profiles in order for a torque to be transmitted, wherein a profiled sleeve (22) is disposed between the inner shaft (7) and the outer shaft (5), wherein the profiled sleeve (22) is fixed to the outer shaft (5) or the inner shaft (7), and the profiled sleeve (22) is deformed while absorbing kinetic energy when the outer shaft (5) in the event of a crash is pushed over the inner shaft (7) beyond an axial adjustment region (27), **characterized in that** the respective other shaft is provided with at least one projection (25) which protrudes into the radial region of the profiled sleeve (22) and deforms the profiled sleeve (22) while absorbing kinetic energy.

2. Steering shaft according to Claim 1, **characterized in that** the profiled sleeve (22) is fixed to the inner shaft (7) and **in that** the outer shaft (5) for the deformation of the profiled sleeve (22) has at least one radially inward protruding projection (25) .

3. Steering shaft according to Claim 2, **characterized in that** the projection (25) is moulded in the material of the tubular outer shaft (5).

4. Steering shaft according to Claim 2 or 3, **characterized in that** at least two projections (25) which lie opposite one another in the circumferential direction of the outer shaft (5) are provided.

5. Steering shaft according to one of Claims 2 to 4, **characterized in that** four protrusions (25) are provided, two of said protrusions (25) being in each case disposed opposite one another in the circumferential direction of the outer shaft (5).

6. Steering shaft according to one of the preceding claims, **characterized in that** the profiled sleeve (22) is composed of plastics material.

7. Steering shaft according to one of the preceding claims, **characterized in that** the outer shaft (5) has at least one bead (20) which engages in a longitudinal groove (21) of the inner shaft (7), **in that** a first axial region of the bead (20) is configured as an adjustment region (27) for adjusting the steering shaft (4) in the axial direction and a second axial region is configured as an energy absorption region (26) in which the bead (20) protrudes further radially inward than in the adjustment region (27) and forms the projection (25) for the deformation of the profiled sleeve (22) .

8. Steering column having an actuating unit (2) and a support unit (3), wherein a steering shaft (4) according to one of the preceding claims is rotatably mounted in the actuating unit (2).

9. Steering column according to Claim 8, **characterized in that** the actuating unit (2) is adjustable in a manual or motorized manner in relation to the support unit (3).

## Revendications

1. Arbre de direction télescopique (4) destiné à un véhicule automobile et comprenant un arbre intérieur (7) qui est reçu dans un arbre extérieur (5) de manière coaxiale et déplaçable dans la direction axiale de l'arbre de direction (4), l'arbre intérieur (7) et l'arbre extérieur (5) ayant des profils correspondants en coupe transversale pour la transmission d'un couple, un manchon profilé (22) étant disposé entre l'arbre intérieur (7) et l'arbre extérieur (5), le manchon profilé (22) étant fixé à l'arbre extérieur (5) ou à l'arbre intérieur (7), et le manchon profilé (22) étant déformé avec absorption d'énergie cinétique si, en cas de collision, l'arbre extérieur (5) est poussé pardessus l'arbre intérieur (7) au-delà d'une plage de réglage axial (27), **caractérisé en ce que** l'autre arbre respectif est pourvu d'au moins une saillie (25) qui se projette jusque dans la zone radiale du manchon profilé (22) et qui déforme le manchon profilé (22) tout en absorbant l'énergie cinétique.

2. Arbre de direction selon la revendication 1, **caractérisé en ce que** le manchon profilé (22) est fixé sur l'arbre intérieur (7) et **en ce que** l'arbre extérieur (5) comporte au moins une saillie (25) qui se projette radialement vers l'intérieur en vue la déformation du manchon profilé (22).

3. Arbre de direction selon la revendication 2, **caractérisé en ce que** la saillie (25) est formée dans la matière de l'arbre extérieur tubulaire (5).

4. Arbre de direction selon la revendication 2 ou 3, **caractérisé en ce qu'**au moins deux saillies (25) sont prévues qui sont en face l'une de l'autre dans la direction circonférentielle de l'arbre extérieur (5).

5. Arbre de direction selon l'une des revendications 2 à 4, **caractérisé en ce que** quatre saillies (25) sont prévues qui sont disposées deux à deux en face l'une de l'autre dans la direction circonférentielle de l'arbre extérieur (5).

6. Arbre de direction selon l'une des revendications précédentes, **caractérisé en ce que** le manchon profilé (22) est en matière synthétique.

7. Arbre de direction selon l'une des revendications précédentes, **caractérisé en ce que** l'arbre extérieur (5) comporte au moins une moulure (20) qui s'engage dans une rainure longitudinale (21) de l'arbre intérieur (7), **en ce qu'**une première région axiale de la moulure (20) est conçue comme région de réglage (27) pour régler l'arbre de direction (4) dans la direction axiale et **en ce qu'**une deuxième région axiale est conçue comme région d'absorption d'énergie (26) dans laquelle la moulure (20) fait saillie plus vers l'intérieur que dans la région de réglage (27) et forme la saillie (25) destinée à déformer le manchon profilé (22) .

8. Colonne de direction comprenant une unité de réglage (2) et une unité de support (3), un arbre de direction (4) selon l'une des revendications précédentes étant monté à rotation dans l'unité de réglage (2).

9. Colonne de direction selon la revendication 8, **caractérisée en ce que** l'unité de réglage (2) peut être réglée manuellement ou par moteur par rapport à l'unité de support (3).
